# EUROPEAN PATENT APPLICATION

(11) **EP 1 201 599 A1**
(43) Date of publication of application: **02.05.2002**
(21) Application number: 00830710.0
(22) Date of filing: 27.10.2000
(51) Int. Cl.: B67C 7/00, B65G 47/84

(54) **System for conveying objects to be processed**

(71) Applicant: SIG SIMONAZZI BEVERAGE S.P.A., 43040 Parma (IT)
(72) Inventor: Zacche', Vanni, 43040 Parma (IT); Gorbi, Alessandro, 43040 Parma (IT)
(74) Representative: Long, Giorgio

(57) **Abstract**

The present invention relates to a system for conveying objects to be processed from and through a plurality of processors, comprising a device for loading/unloading the objects onto/from said processors.

In particular, the present invention relates to a system (1) for conveying objects (4), characterized in that it comprises a plurality of static processors (2), arranged along at least one predefined path (A, A'), and one or more stations (3, 3') for loading/unloading said objects (4), said loading/unloading stations (3, 3') being movable along said path.

## Description

The present invention relates to a system for conveying objects to be processed from and through a plurality of processors, comprising a device for loading/unloading the objects onto/from said processors.

The known conveying systems normally consist of two types: linear or rotary. A further distinction may be made between the case where a series of objects must be processed along one or more stationary processing stations, each of said processing stations being designed to perform a different operation and being able to process simultaneously a plurality of objects, and the case where the plurality of objects must be processed for the same operation in a plurality of processing stations, each of these being designed to process a single object. An example of this latter type of processing operation is the thermomoulding of plastic material, in particular the blowing of bottles made from polyethylene terephthalate, in which the individual premould, after being heated to the softening temperature of the plastic material, is inserted into the associated mould for blowing.

Although, in the abovementioned case, it is possible to use both linear and rotary blowing machines, the latter type are characterized by a greater productivity, in particular in the case of large-size carousels, each of which is able to accommodate a considerable number of processors (blowing units) for the bottles. The processors will therefore not be stationary, but movable integrally with the carousel. The carousel rotates at a speed such that the entire bottle processing cycle is completed during a rotation of the carousel through less than 180°, namely rotation between the premould loading station and the station for unloading the finished bottles.

The type of apparatus described hereinabove, although having a high productivity, has certain drawbacks which make a different solution desirable.

Firstly, the carousel occupies a large area with a significant wastage of space, in particular in the case of large-size (and therefore high-productivity) carousels. In this latter case, the central space is in fact only partly used for housing the motor.

A further drawback consists in the fact that, in the case of movement of processors which have a considerable weight and size, the motor must be designed with suitable power requirements, resulting in a notable energy consumption. Indeed, in rotary apparatus, it is precisely the movement of the processors in synchronism with the objects to be processed which ensures a high productivity of the system.

The problem which forms the basis of the present invention is therefore that of providing a system for conveying objects to be processed which, while maintaining a high productivity, does not have the drawbacks of the apparatus according to the prior art described above.

This problem is solved by a system for conveying objects to be processed, as defined in the accompanying claims.

It is obvious that the conveying system according to the present invention is not applicable solely to the example, described above, of machines for blowing PET bottles, but may be generally used in all those cases where a plurality of objects must be processed in a plurality of processors.

For example, on 29 April 1999 the Applicant of the present patent application filed the European patent application No. 99 830 254.1 which is entitled "Method and apparatus of the continuous type for sterilizing bottled beverages" and which envisages a series of high-pressure sterilization chambers moving on a carousel or on a linear conveying system. It is obvious that the conveying system according to the present invention may also be advantageously applied to this apparatus.

Further characteristic features and advantages of the system for conveying objects to be processed according to the present invention will emerge more clearly from the description of a preferred embodiment, provided hereinbelow by way of a non-limiting example, with reference to the following figures, in which:
Figure 1 shows a top plan view of a detail of the conveying system according to the present invention;
Figure 2 shows a perspective view of the detail in Figure 1, showing a pair of loading/unloading stations;
Figure 3 shows a schematic top plan view of the conveying system according to the present invention;
Figure 4 shows a top plan view of the loading/unloading station in Figure 1 during loading of the objects to be processed;
Figure 5 shows a top plan view of the loading/unloading station in Figure 1 during unloading of the processed objects.

With reference to the abovementioned figures, a preferred embodiment of the invention will now be described. A characteristic feature of the conveying system according to the present invention, which is generally denoted by the number 1, is that it has a plurality of static processors 2, arranged along a predefined path A, and one or more stations 3 for loading/unloading the objects 4 to be processed, movable along said path. Each of said processors 2 is able to process one object 4 at a time.

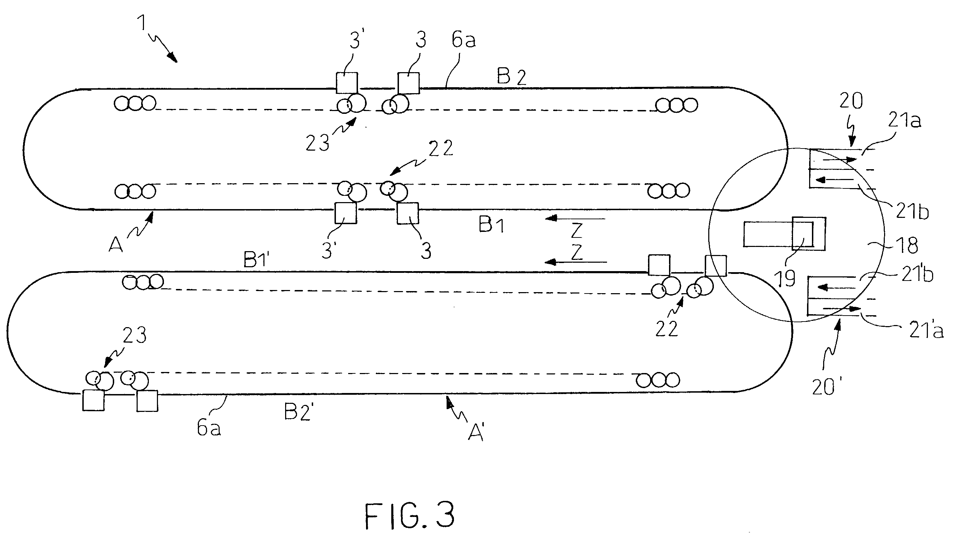

The loading stations 3 consist of a carriage 5 mounted on slides 6 movable along a rail 6a which extends along said predefined path A (see Figure 3). This carriage 5 is moved autonomously by an actuator (not shown in the figures) which preferably will be a brushless motor.

The carriage 5 has, movably arranged on it, a tray 7 intended to receive a plurality of objects to be processed. The tray 7 is movable, with respect to the carriage 5, along the longitudinal direction x, x' in the two directions indicated by the arrows.

The carriage 5 also rotatably supports a dispensing star-wheel 8 which is arranged in an intermediate position between the tray 7 and the processors 2 so as to perform loading of the objects 4 from the tray 7 into the processors 2. Both the dispensing star-wheel 8 and the tray 7 are moved independently by means of suitable actuators not shown in the figures.

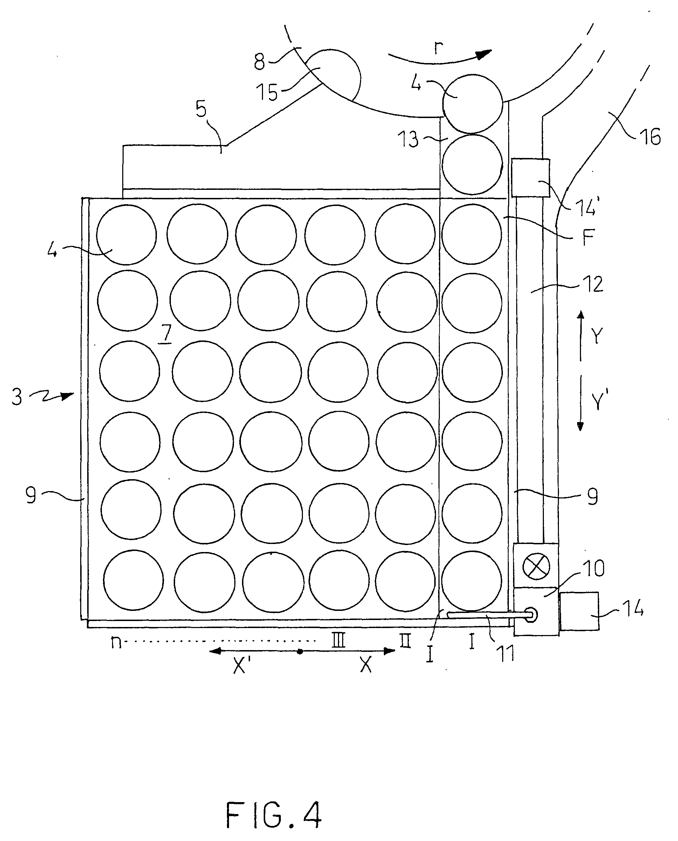

As shown in Figure 4, the tray 7 is equipped with a series of compartments 7' (numbered in the order I, II, ..., n) arranged along an axis perpendicular to the direction x, x', these compartments being intended to receive respective rows of objects 4 to be processed. The compartments 7' are separated by dividing walls designed to keep the rows of objects 4 aligned. Alternatively, the compartments 7' may be merely of a virtual nature, defining the space for receiving a row of objects. The tray 7 also has shoulders 9 for retaining the objects positioned along the three outer sides of the tray, while leaving free, on the other hand, the side facing the line of processors.

The carriage 5 is provided with means 10 for supplying the objects 4 to the dispensing star-wheel 8. These supply means 10 consist, in the example according to Figure 4, of a thruster 11 of the known type which moves along the direction y, y' perpendicular to the direction x, x' of travel of the carriage 7, in the two directions indicated by the arrows, by means of a slide mounted on a special rail 12. The thruster 11 is provided with a spring which tends to recall it into the rest position where the axis of the thruster is arranged longitudinally with respect to said direction y, y' and therefore does not interact with the objects positioned on the tray 7. The thruster 11 is therefore arranged in a position perpendicular to said direction y, y' only by virtue of interaction with the row of objects 4, as will be described more clearly below. The movement of the supply means 10 is independent of the movement of the tray 7 and is performed by means of a suitable actuator not shown in the figures.

A loading chute 13 is also fixed onto the carriage 5. This loading chute 13 is arranged in an intermediate position between the tray 7 and the dispensing star-wheel 8, in the end-of-travel position of the thruster 11, and has the function of a bridge between the tray and the position for take-up of the objects 4.

The carriage 5 also has a first position sensor 14 in the start-of-travel position I of the thruster 11 and a second position sensor 14' in the end-of-travel position F of the thruster. These position sensors 14, 14' have the function, respectively, of verifying the correct position of the objects 4 on the tray 7 and the "tray empty" condition, as will appear more clearly from the remainder of the present description.

The dispensing star-wheel 8 has, along its perimeter, a plurality of seats 15 each intended to receive an object 4. This configuration of the dispensing star-wheel 8 is any case widely known and will not be described in further detail.

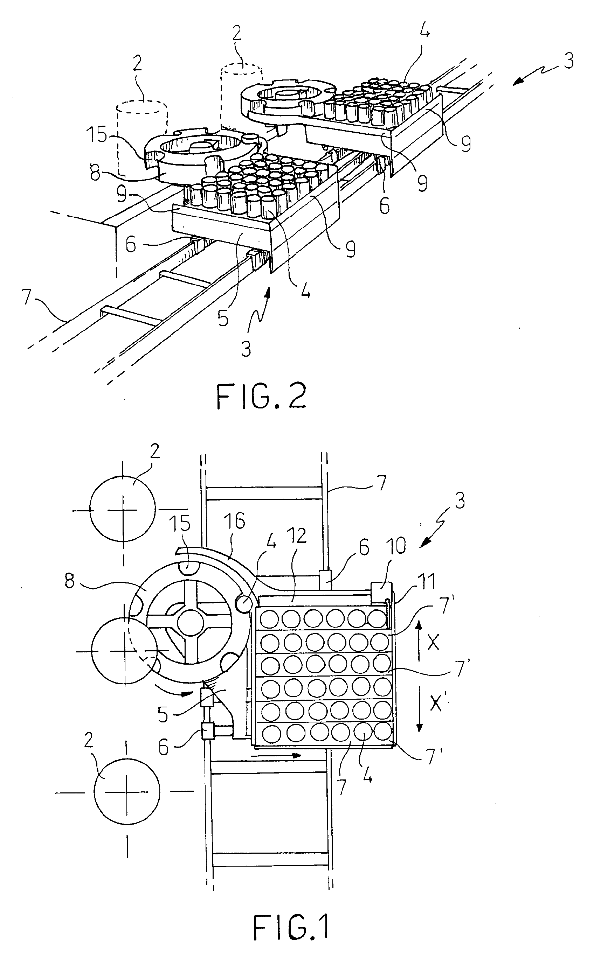

As shown in Figure 1, the loading station 3 is completed by a screen 16 with a profile in the form of an arc of a circle, the shape and the function of which are also widely known to a person skilled in the art and therefore will not be described in greater detail.

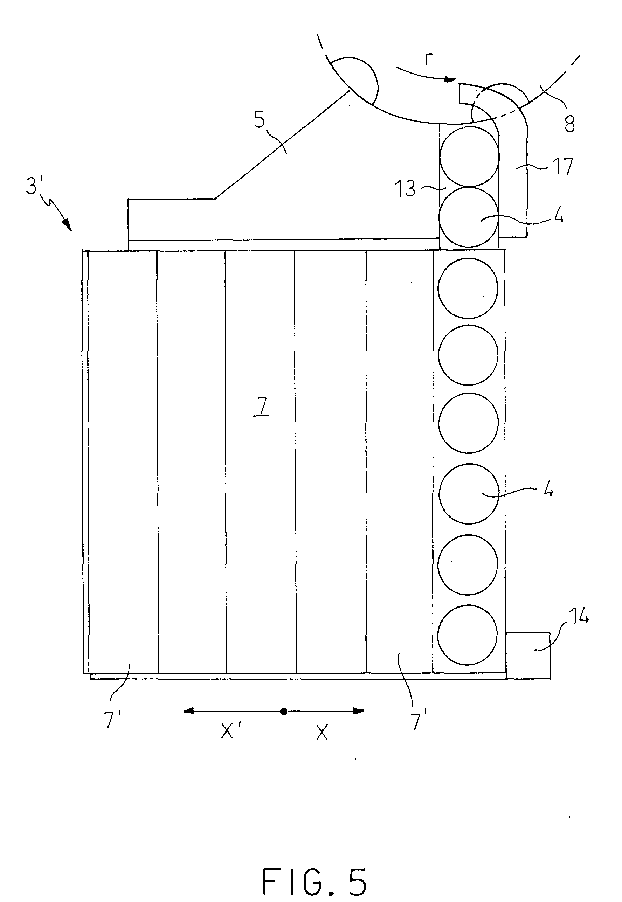

Figure 5 shows an unloading station 3' which is entirely similar to the loading station 3 described above, but has the difference that the chute 13 is provided with a hook-shaped extractor 17 which facilitates removal of the processed object 4 from the dispensing star-wheel 8. The position sensor 14 will in this case detect the "tray full" condition, as will be described more fully below. The position sensor 14' and the thruster 11 may not be provided in the unloading station 3'.

As shown in Figure 3, an example of a conveying system according to the present invention consists of two paths A, A' positioned in parallel and each of which has a pseudo-elliptical progression with substantially rectilinear larger sides B₁, B₂, B₁', B₂' and curved connecting sections, said paths A, A' consisting of a rail 6a. A plurality of processors 2 is arranged internally alongside the said sides B₁, B₂, B₁', B₂' of the paths A, A'. The rail 6a of each of the paths A, A' has, travelling along it, two pairs of loading/unloading stations 3, 3', i.e. one loading station 3 and one unloading station 3' travelling spatially coupled together along the rail 6a in the direction z indicated by an arrow in the figure.

A station 18 for handling the objects 4 is arranged at one end of the paths A, A', in an intermediate position between the two paths. The handling station 18 comprises an anthropomorphic robot 19 able to manipulate simultaneously one or more packs of objects 4. This anthropomorphic robot 19 is of the type known per se and will therefore not be described in greater detail.

At the handling station 18, handling means 20, 20' - one for each path A, A' - take up the objects 4. Each of these handling means 20, 20' comprises a pair of conveyor belts 21a, 21b, 21'a, 21'b which are able to travel in the direction of the arrows shown in the figure. The conveyor belts 21a and 21'a are connected to a store for storing the processed objects 4 (not shown in the figure), while the conveyor belts 21b and 21'b are connected to a store for supplying the objects 4 to be processed (not shown in the figure).

The processors 2 may be of various types such as, for example, moulds for thermomoulding or blowing of PET bottles.

Although it is not excluded that the processors 2 may be of various types or may perform a different operating function within the same apparatus, the most common case is that which envisages a plurality of processors 2 positioned in series and all able to perform the same operating function (for example, a plurality of blowing units), both in parallel and in a staggered manner.

One particular case may consist in the application of the conveying system according to the present invention to an apparatus which envisages a plurality of pressurization devices which form the processors 2 according to the present invention. These pressurization devices may, for example, be used in a process and in an apparatus for the high-pressure sterilization of bottled beverages such as, for example, those described in European patent application No. 99 830 254.1 which is entitled "Method and apparatus of the continuous type for the sterilization of bottled beverages" and the description of which, relating to the sterilization bell and to the sterilization process, is incorporated herein by way of reference. A further example of a pressurization processor, which is used, by way of example, in a process for sterilizing packaged food and to which the conveying system which is the subject of the present invention may be advantageously applied, is that claimed in European patent application No. 00830705.0 which was filed on 26.10.2000 in the name of the Applicant of the present application and the description of which is incorporated herein by way of reference.

The conveying system according to the present invention is managed by an actuating and control unit which, among other functions, controls the independent movement of the carriages 5, the dispensing star-wheels 8, the trays 7 and the thrusters 11 as well as the operation of the anthropomorphic robot 19 and of the processors 2. The position sensors 14, 14' are also connected to said actuating and control unit, as will be illustrated below.

Still with reference to the figures, the mode of operation of the conveying system which is the subject of the present invention will now be described.

As shown in Figure 3, the conveyor belts 21b, 21'b supply the handling station 18 with the objects 4 to be processed. A first pair 22 and a second pair 23 of loading/unloading stations 3, 3' are movably positioned on each of the paths A, A', as described further above. The first pair 22 of loading/unloading stations 3,3' for each of the paths A, A' initially reaches the loading/unloading position within the operating radius of the robot 19. The anthropomorphic robot 19 then removes a pack of objects 4 from each of the conveyor belts 21b, 21'b and places it on the tray 7 of the corresponding loading station 3. At the same time, the robot 19 removes a pack of already processed objects 4 from each of the unloading stations 3' and places it on the corresponding conveyor belt 21a, 21'a which conveys away these processed objects 4 to the corresponding store.

The term "pack of objects" is understood as meaning a plurality of objects 4 which have a number and arrangement such as to saturate the capacity of the tray 7 and be arranged in an ordered manner on it.

At this point, the first pair 22 of loading/unloading stations 3, 3' moves along the respective path A, A', performing at each pair of processors 2 an exchange of objects, namely extracting from one processor an already processed object 4 and loading an object 4 to be processed into the immediately preceding empty processor. The pair of loading/unloading stations 3, 3' continues along the respective path A, A', repeating the operation described above at each pair of processors 2 until the entire path has been covered. The second pair 23 of loading/unloading stations 3, 3' arranged on the same path has the loading station 3 and the unloading station 3' in an inverted position compared to the first pair 22 of loading/unloading stations described above, namely it has, downstream, the loading station 3 and, upstream, the unloading station 3'. In this way, by performing the same functions described above for the first pair 22 of loading/unloading stations, this second pair 23 of loading/unloading stations will remove an object 4 already processed by the processor 2 previously loaded by the first pair 22 and will load a new object 4 to be processed onto the processor 2 previously unloaded by said first pair 22 of loading/unloading stations. The speed of travel of the pairs of loading/unloading stations and their relative distance are calibrated so as to complete processing of the object 4 between passing of the first pair 22 and of the second pair 23 of loading/unloading stations.

With reference to Figures 4 and 5, the operation of loading and unloading the objects 4 onto and from the processor 2 will now be described.

Figure 4 illustrates the loading operation. The first row of objects 4 to be processed is arranged in an ordered manner in the respective compartment 7' opposite the chute 13. The thruster 11 is positioned at the start-of-travel position I and, by virtue of interaction with the last object 4 in the row, is in a perpendicular position with respect to the direction y, y'. When the position sensor 14 detects the condition of correct position of the objects 4 and the "compartment full" condition, the actuating and control unit activates the actuator which causes the thruster 11 to slide along the rail 12 in the direction y indicated by the arrow, pushing the row of objects 4 towards the chute 13 and, therefore, the dispensing star-wheel 8. The objects 4 are then loaded, one by one, into the respective seats 15 of the star-wheel 8 which rotates in the direction r of the arrow so as to always have a free seat at the end of the chute 13. The operation continues until, after loading of the last object in the row, the position sensor 14' has detected the "compartment empty" condition. At this point, the actuating and control unit will actuate the actuator of the tray 7, causing the latter to be displaced in the direction x indicated by the arrow until the second compartment 7' containing the second row of objects 4 to be processed is positioned opposite the chute 13. In the meantime, the thruster 11, which, having reached the end-of-travel position F at the same time as loading of the last object, had already been recalled by the spring into the rest position, will be brought back into the start-of-travel position I. In this position the thruster 11, interacting with the new row of objects 4, positions itself again in the perpendicular thrusting position and the loading operation resumes as described above, being repeated n times until the tray 7 is completely empty. At this point the tray 7 will be displaced in the direction x of the arrow, reassuming the initial position, ready to receive a new pack of objects 4 to be processed.

Figure 5 shows, on the other hand, the operation of unloading the already processed objects 4. The empty tray 7 is positioned with its first compartment 7' opposite the chute 13. The dispensing star-wheel 8, which removed the processed objects 4 from the corresponding processor 2, rotates in the direction r of the arrow so that the object interacts with the hook-shaped extractor 17 which, owing to its special shape, conveys the object 4 onto the chute 13. From here the processed object is guided onto the tray 7 by the thrust of the following object extracted from the dispensing star-wheel, and so on, until the first compartment 7' is filled. At this point the position sensor 14 will detect the "compartment full" condition and will send a signal to the actuating and control unit which will actuate the actuator which moves the tray 7 in the direction x of the arrow, bringing a new empty compartment 7' opposite the chute 13. The operation will be repeated n times until the tray 7 has been completely filled. At this point, the actuator will displace the tray 7 in the direction x', bringing it back into the initial position.

The loading and unloading operation performed between the dispensing star-wheel 8 and the processor 2 will not be described since it is of the conventional type and therefore does not form part of the subject-matter of the present invention. It should merely be remembered that the transfer of the objects may, for example, be facilitated by take-up means such as a system of grippers, which are also known per se.

It should be noted, however, that the presence of the dispensing star-wheel 8 on the movable loading/unloading stations 3, 3' performs an essential role in the economy of the entire conveying system. In fact, the dispensing star-wheel 8 prevents the loading/unloading stations 3, 3' from stopping at each processor (or pair of processors) since, by combining its angular movement with the linear advancing movement of the carriages 5, it allows movement of the objects 4 from and through the processors 2 at a relative speed tending towards zero. It is therefore obvious that this characteristic feature results in a considerable increase in the productivity.

From the above comments it can be easily understood that the entire operation requires a high degree of synchronism during execution of the various steps. Firstly, axial control or relative phase alignment of the carriage 5, the tray 7, the dispensing star-wheel 8 and the processor 2 must be performed. The system also allows each object 4 to be assigned a pair of Cartesian coordinates which identify its position on the tray 7. In practice, each individual processor 2 has a corresponding object 4 with a specific pair of Cartesian coordinates on the tray 7. Each processor 2 also has a system for checking that processing has indeed occurred and/or has occurred correctly. For example, in the case of the abovementioned high-pressure sterilization processors, this checking system may comprise a pressure sensor inside the pressurization chamber and/or a sensor for detecting the stroke of the pressurization piston or a reader device for reading the power used by the actuator of said piston. This detection system will send to the actuating and control unit a message indicating that processing has not occurred or has occurred incorrectly or even indicating a malfunction of the processor (in the case in which the signal indicating no or incorrect processing is repeated for more than one object 4). By means of the system for identifying the position of each object on the tray 7 using Cartesian coordinates, in combination with the aforementioned system for detecting the processing state of the processors, it is therefore possible to instruct the anthropomorphic robot 19 to discard the object 4 which has not been processed correctly and not to load objects onto the faulty processor 2. The dispensing star-wheel 8 is also managed by the actuating and control unit so as to be able to avoid loading of an object 4 onto a defective processor 2.

The conveying system according to the invention has many advantages.

Firstly, since the objects to be processed are moved while the processors are kept stationary, the motors may be designed so as to have lower power requirements compared to the known apparatus, it being well known that the movement of a plurality of processors of considerable weight and size requires a considerable power consumption.

Secondly, the conveying system according to the present invention is characterized by a notable flexibility, in particular as regards the arrangement of the paths A. Instead of the pseudo-elliptical form shown in the example described above, these paths may in fact have a desired form and size depending on the particular spatial or configurational requirements of the room in which the apparatus will be used. For example, it will be possible to provide an alternate path along a single straight rail or to limit the plan dimensions by distributing the processors along paths which are staggered or arranged on different levels. In this latter embodiment the robot 19 may be movable also in the vertical direction. In any case it is obvious that the area occupied by the conveying system according to the present invention is considerably smaller than that required to house an apparatus of the prior art.

The flexibility of the conveying system according to the invention is also reflected in a high degree of production flexibility. Although two paths A, A' arranged in parallel have been shown in Figure 3, it will also be possible to provide several paths served by one or more robots 19. The number of loading/unloading stations may also vary from the single unit to a plurality of stations, depending on the productivity requirements. In this latter case, in fact, the cycle time will be reduced, with a consequent lower handling speed of the loading/unloading stations. It is not even necessary for the processors 2 to be positioned along the path at the same distance from each other: they may, in fact, be grouped together along particular sections of the path or arranged at different mutual distances, depending on the spatial requirements and processing time.

The movement of each loading/unloading station may be of any type with accelerations and decelerations, stoppages and restarts, so as to optimize the times in accordance with requirements.

Owing to the fact that an independent movement system is provided for the carriages 5, the trays 7 and the dispensing star-wheels 8, accurate control by the actuating and control unit is possible. In the conveying system according to the present invention, the individual object 4 to be processed or already processed is constantly monitored during each stage of processing, by virtue of the Cartesian coordinate identification system described above. Defective objects or processor faults may therefore be easily detected.

The pairs of loading/unloading stations 3, 3' may be arranged on the same carriage 5 or lie on separate carriages. While in the first case their movement will be optimized, the second version will allow greater operational flexibility.

It is obvious that the embodiments which have been described are only some particular embodiments of the system for conveying objects to be processed according to the present invention, to which the person skilled in the art will be able to make all those modifications necessary for adaptation thereof to particular applications, without thereby departing from the protective scope of the present invention.

## Claims

1. System (1) for conveying objects (4),
**characterized in that** it comprises a plurality of static processors (2), arranged along at least one predefined path (A, A'), and one or more stations (3, 3') for loading/unloading said objects (4), said loading/unloading stations (3, 3') being movable along said path.

2. Conveying system according to Claim 1, in which said processors (2) are arranged in series and are processors designed to all perform the same operating function.

3. Conveying system according to Claim 1 or 2, in which said loading/unloading stations (3, 3') comprise a dispensing star-wheel (8).

4. Conveying system according to any one of Claims 1 to 3, in which each of said processors (2) is able to process one object (4) at a time.

5. Conveying system according to any one of Claims 1 to 4, in which said loading stations (3) comprise a carriage (5) mounted on slides (6) movable along said predefined path (A, A'), there being movably arranged on said carriage (5) a tray (7) intended to receive a plurality of objects (4) to be processed, said tray (7) being movable, with respect to the carriage (5), along the longitudinal direction (x, x'); said dispensing star-wheel (8) also being rotatably mounted on said carriage (5) in an intermediate position between the tray (7) and the processors (2) so as to perform loading of the objects (4) from the tray (7) into said processors.

6. Conveying system according to Claim 5, in which said carriage (5) is provided with means (10) for supplying the objects (4) to said dispensing star-wheel (8).

7. Conveying system according to Claim 6, in which said supply means (10) comprise a thruster (11) displaceable along the direction (y, y') perpendicular to said direction (x, x') of travel of the carriage (5).

8. Conveying system according to any one of Claims 5 to 7, in which said carriage (5) comprises a loading chute (13) arranged in an intermediate position between said tray (7) and said dispensing star-wheel (8), said loading chute (13) having the function of a bridge between said tray and the take-up position of said dispensing star-wheel (8).

9. Conveying system according to any one of Claims 5 to 8, in which said carriage (5) comprises a first position sensor (14) in the start-of-travel position (I) of the thruster (11) and a second position sensor (14') in the end-of-travel position (F) of the thruster.

10. Conveying system according to any one of Claims 1 to 4, in which said unloading stations (3') comprise a carriage (5) mounted on slides (6) movable along said predefined path (A, A'), there being movably arranged on said carriage (5) a tray (7) intended to receive a plurality of processed objects (4), said tray (7) being movable, with respect to the carriage (5), along the longitudinal direction (x, x'); said dispensing star-wheel (8) also being rotatably mounted on said carriage (5) in an intermediate position between said tray (7) and the processors (2) so as to perform unloading of the objects (4) from the processor into said tray; said carriage (5) also comprising a loading chute (13) arranged in an intermediate position between said tray (7) and said dispensing star-wheel (8), said loading chute (13) being provided with a hook-shaped extractor (17) for facilitating removal of the processed object (4) from the dispensing star-wheel (8).

11. Conveying system according to Claim 10, in which said carriage (5) comprises a position sensor (14) for detecting the "tray full" condition.

12. Conveying system according to any one of Claims 5 to 11, in which said carriage (5) is moved by a brushless motor.

13. Conveying system according to any one of Claims 5 to 12, in which said carriage (5), said tray (7) and said dispensing star-wheel (8) are moved independently of each other.

14. Conveying system according to any one of Claims 5 to 13, in which said tray (7) has a series of compartments (7') arranged along an axis perpendicular to said direction (x, x'), these compartments (7') being intended to receive respective rows of objects (4).

15. Conveying system according to Claim 14, in which said compartments (7') are separated by dividing walls designed to keep the rows of objects (4) aligned and in which said tray (7) comprises shoulders (9) for retaining the objects (4) positioned along the three outer sides of the tray, while leaving free the side facing the line of processors (2).

16. Conveying system according to any one of Claims 1 to 15, said conveying system (1) comprising two paths (A, A') positioned in parallel, each of the said paths (A, A') having a pseudo-elliptical progression with substantially rectilinear larger sides (B₁, B₂, B₁', B₂') and curved connecting sections; a plurality of processors (2) being arranged internally alongside said rectilinear sides (B₁, B₂, B₁', B₂').

17. Conveying system according to Claim 16, said paths (A, A') comprising a rail (6a) on which two pairs of loading/unloading stations (3, 3') travel, a loading station (3) and an unloading station (3') travelling spatially coupled.

18. Conveying system according to Claim 17, in which said loading station (3) and said unloading station (3') are arranged on a same carriage (5).

19. Conveying system according to any one of Claims 16 to 18, said conveying system comprising, in an intermediate position between the two paths (A, A'), a station (18) for handling the objects (4), said handling station (18) comprising an anthropomorphic robot (19).

20. Conveying system according to Claim 19, in which, at said handling station (18), handling means (20, 20') take up the objects (4), these handling means (20, 20') comprising a pair of conveyor belts (21a, 21b, 21'a, 21'b) connected to a store for storing the processed objects (4) and to a store for supplying the objects (4) to be processed.

21. Conveying system according to any one of Claims 1 to 20, in which said conveying system is managed by an actuating and control unit which performs at least the functions of:
- controlling the independent movement of the carriages (5), the dispensing star-wheels (8), the trays (7) and the thrusters (11);
- controlling operation of the anthropomorphic robot (19) and of the processors (2);
- verifying the information sent by the position sensors (14, 14') and by the system for checking that processing of the processors (2) has occurred and/or is correct and sending a response command to the system;
- performing axial control or relative phase alignment of the carriage (5), the tray (7), the dispensing star-wheel (8) and the processor (2).

22. Conveying system according to Claim 21, in which said actuating and control unit also performs the function of assigning to each object (4) a pair of Cartesian coordinates which identify its position on the tray (7).

23. Conveying system according to any one of Claims 1 to 22, in which said processors (2) are pressurization devices.

24. Conveying system according to Claim 23, in which said pressurization devices are devices for the high-pressure sterilization of packaged food.

25. Conveying system according to Claim 23 or 24, in which said system for checking that processing of the processors (2) has occurred and/or is correct comprises a pressure sensor inside the pressurization chamber and/or a sensor for detecting the stroke of the pressurization piston and/or a reader device for the power used by the actuator of said piston.
